# FASCICULE DE BREVET EUROPEEN

(11) **EP 0 607 350 B1**
(45) Date de publication et mention de la délivrance du brevet: **20.06.2001**
(21) Numéro de dépôt: 92922602.5
(22) Date de dépôt: 09.10.1992
(51) Int. Cl.: G02F 1/1335, G02F 1/136

(54) **Ecran Plat à Cristaux Liquides**
Flüssigkristall-Bildschirm
Liquid Crystal Display Panel

(30) Priorité: 11.10.1991 FR 9112586
(43) Date de publication de la demande: 27.07.1994
(73) Titulaire: THOMSON-LCD, 75008 Paris (FR)
(72) Inventeur: CASTLEBERRY, Donald, F-92045 Paris-La Défense Cédex 67 (FR)
(74) Mandataire: Ruellan-Lemonnier, Brigitte
(86) Numéro de dépôt international: FR9200944
(87) Numéro de publication internationale: WO9307528

(56) Documents cités:
- EP-A- 0 209 112
- EP-A- 0 271 313
- EP-A- 0 328 329
- EP-A- 0 375 268
- PROCEEDINGS OF THE SID. vol. 25, no. 4, 1984, NEW YORK, US pages 281 - 286 M.SUGATA ET AL. 'A TFT-Addressed Liquid-Crystal Color Display'

## Description

La présente invention a pour objet un écran à cristal liquide comportant un masque opaque (appelé communément "Black Matrix").

Un écran à cristal liquide est constitué d'un certain nombre de cellules à cristal liquide disposées selon un réseau matriciel. Ces cellules sont formées à partir de deux plaques supports, en général en verre, collées l'une à l'autre par un joint périphérique qui ménage une cavité de faible épaisseur (de l'ordre de quelques microns) dans laquelle se trouvent 1' élément optiquement actif : le cristal liquide. La première plaque support est constituée d'un substrat contenant un premier jeu d'électrodes et les composants de commande en couches minces disposés entre ces électrodes auxquelles ils sont connectés. La seconde plaque support constitue une contre électrode.

Chaque cellule ainsi formée fonctionne en valve optique. La modification locale de la transmission ou de la réflexion de la lumière est obtenue en appliquant de l'extérieur une tension entre un contact d'accès de la plaque et un contact de la contre-plaque. Cette tension fait naître un champ électrique entre les électrodes en regard et active le volume de cristal liquide situé entre les deux électrodes qui modifie plus ou moins les caractéristiques de la lumière qui le traverse.

Dans la suite du texte, nous appelons Pixel (pour "Picture Element" en langue anglaise) la cellule formant le point élémentaire d'image ou d'affichage constitué par l'électrode, le cristal liquide, la contre-électrode, le composant de commande et les connections du composant avec l'électronique périphérique.

La surface active du Pixel est la surface couverte par l'électrode et le cristal liquide sur laquelle les effets électro-optiques désirés sont obtenus ; cette surface peut être supérieure ou inférieure à la surface effective de l'électrode car les effets de bord autour de l'électrode peuvent soit augmenter soit diminuer la surface de la zone active (ces variations étant de l'ordre de 1µm en deçà ou au-delà de la zone couverte par l'électrode).

La surface non commandée du Pixel est constituée par toute la surface du Pixel hors la surface active définie précédemment.

L'utilisation, pour améliorer le contraste d'un masque opaque (ou Black Matrix) pour cacher les interstices d'un affichage à cristal liquide ou à tube cathodique est connue. Dans le cas d'un écran à cristal liquide, il s'agit d'un masque recouvrant les surfaces non commandées des Pixels. Ce masque opaque, qui peut être en métal réfléchissant, bloque la transmission de la lumière sur la surface matricielle non commandée et permet d'améliorer le contraste de l'écran.

Dans l'art connu, ce masque opaque matriciel est dessiné sur la contre-plaque de verre constituant la contre-électrode de la cellule. Au cours du procédé de fabrication, cette contre plaque de verre est positionnée par rapport à la plaque formant le substrat sur laquelle sont déposées les électrodes et collée à celle-ci par un joint périphérique. La précision de ce positionnement est en général limitée à plus ou moins 5µm. Pour intégrer cette incertitude due au procédé de collage utilisé, le masque opaque qui se superpose aux pixels doit être surdimensionné par rapport aux dimensions de la surface non commandée et va occulter une partie non négligeable de la surface active de ces pixels. Pour des écrans à moyenne ou bonne résolution, c'est à dire dont le pas du réseau est de l'ordre de 150 à 250µm, comme dans le cas des écrans à vision directe, la transmission de la lumière n'est pas réduite de façon significative. Par contre, pour des écrans dits à haute définition, comme pour les écrans projecteurs, cette perte de surface active provoque une perte significative de la transmission de la lumière. Par exemple pour un écran de pas de 50µm, la surface active des pixels aura environ 40µm de coté, soit 64% de la surface totale du pixel. Si l'ouverture dans le masque opaque déborde de 10µm sur la surface active des pixels, celle-ci ne représente plus que 36% de la surface totale du pixel.

Pour remédier à cet inconvénient, on a proposé dans le brevet EP-A-0271313 de prévoir un masque opaque en une seule pièce formant un quadrillage entre les composants de commande et le substrat sur lequel ils sont réalisés.

L'invention propose un écran plat à cristaux liquides à matrice active avec les caractéristiques techniques de la revendication 1.

Les technologies utilisées pour déposer les différentes couches minces sur le substrat sont des technologies du type de celles utilisées pour la fabrication de circuits intégrés dans lesquelles les équipements ont des précisions de l'ordre de 0,5µm. Cette augmentation de précision diminue la perte de surface active.

L'invention sera mieux comprise et d'autres avantages apparaîtront à la lecture de la description qui va suivre, donnée à titre non limitatif, et accompagnée des figures annexées suivantes :
- la figure 1 représente le positionnement d'un masque opaque par rapport à la surface matricielle non commandée d'un écran à cristal liquide selon l'art connu;
- la figure 2 représente le positionnement d'un masque opaque par rapport à la surface matricielle non commandée d'un écran à cristal liquide selon un autre art connu;
- la figure 3 représente le positionnement d'un masque opaque par rapport à la surface matricielle non commandée d'un écran à cristal liquide selon l'art connu;
- la figure 4 représente le positionnement d'un masque opaque par rapport à la surface matricielle non commandée d'un écran à cristal liquide selon un mode de réalisation de l'invention;
- la figure 5 représente une coupe d'un écran à cristal liquide équipé d'un dispositif de masque opaque selon un autre mode de réalisation de l'invention;

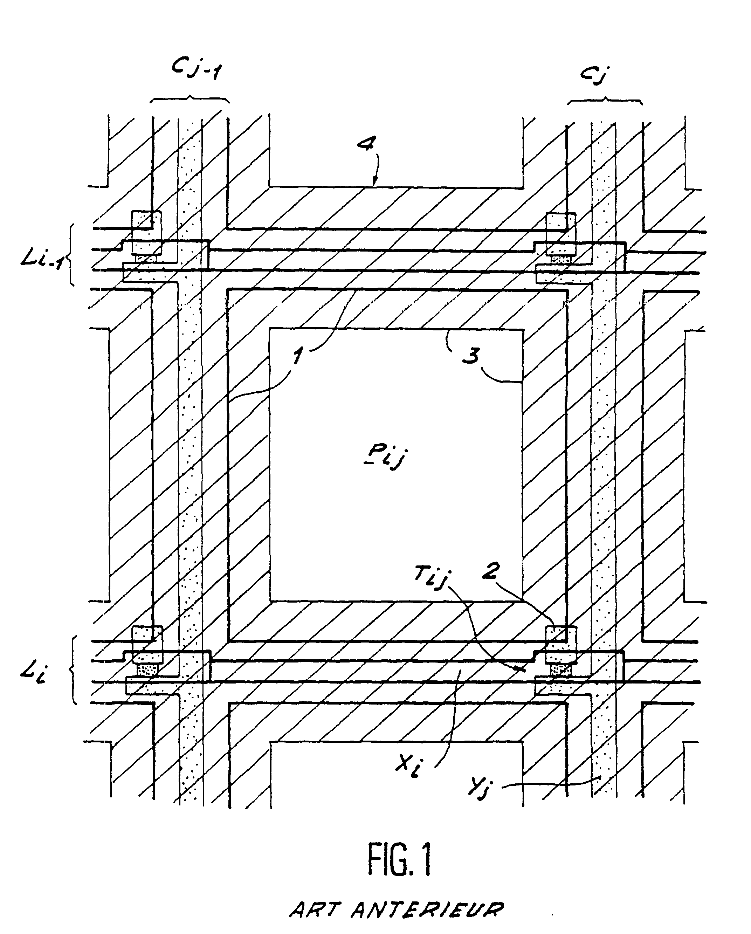

Sur la figure 1 est représentée une partie du réseau matriciel comportant des éléments à transparence ou reflectance contrôlée et leurs composants de commande.

Pour ne pas alourdir la description, nous ne considérons qu'un seul ensemble élément composant indexé ij, étant bien entendu que la même description s'applique à tous les autre ensembles éléments composants du réseau matriciel.

Les éléments Pij contigus sont portés par une plaque constituant le substrat.

Le détail d'une cellule photoélectrique et de son procédé de fabrication est décrit plus loin.

Chaque élément Pij constitue un point élémentaire d'affichage et sa surface s'étend entre les bords 1, sensiblement en forme de carré.

La surface comprise entre l'élément Pij et les huit autres éléments voisins apparaît sous forme de lignes Li et de colonnes Cj. Ces

lignes et ces colonnes portent les connexions Xi et Yj reliant les composants de commande Tij situés aux intersections de ces lignes Li et colonnes Cj à l'électronique de commande. périphérique. Un composant Tᵢⱼ est connecté à la cellule Pᵢⱼ correspondante par l'intermédiaire d'un organe de connexion 2. Dans l'exemple, les composants sont des transistors en couches minces (TFT pour Thin Film Transistor en langue anglaise) en silicium amorphe mais ces composants de commande peuvent être aussi de type à deux terminaisons comme les diodes en éléments métal-isolant-métal, ou de type à trois terminaisons comme les transistors en silicium mono ou polycristallin, sans sortir du cadre de l'invention.

Les éléments Pᵢⱼ à transparence ou réflectance contrôlée peuvent être des cellules à cristal liquide dont les effets électro-optiques modulant la transmission de la lumière par la cellule sont des mécanismes du type agissant sur la polarisation de la lumière comme le mode nématique en hélice, la biréfringence contrôlée électriquement (BCE) ou le mode ferro-électrique, ou bien du type agissant sur la diffusion or l'absorption de la lumière.

L'écran considéré ici est un écran dit à haute résolution dont le pas du réseau est de l'ordre de 40 à 100*µ* m et les surfaces non commandées 8 à 20*µ*m, mais l'invention peut s'appliquer à tous types d'écrans à basse, moyenne ou haute résolution.

On superpose, selon l'art connu, aux éléments Pᵢⱼ, un masque opaque 4 dont la surface est représentée en zone hachurée sur la figure 1. Ce masque opaque 4 est percé de fenêtres par les ouvertures desquelles apparaîssent les surfaces actives des éléments Pᵢⱼ. Il est gravé sur la contre plaque avec une imprécision qui peut être de l'ordre de plus ou moins 0,1*µ*m puisque l'on peut utiliser des technologies de gravure du type photolithographie, mais l'imprécision du procédé de collage de la plaque et de la contreplaque ± 5*µ*m impose un surdimensionnement de 5 *µ*m du masque opaque par rapport aux surfaces non commandées. Cela entraîne une réduction de la surface active des éléments Pᵢⱼ correspondant, sur la figure 1 à la surface comprise entre les bords 1 et 3.

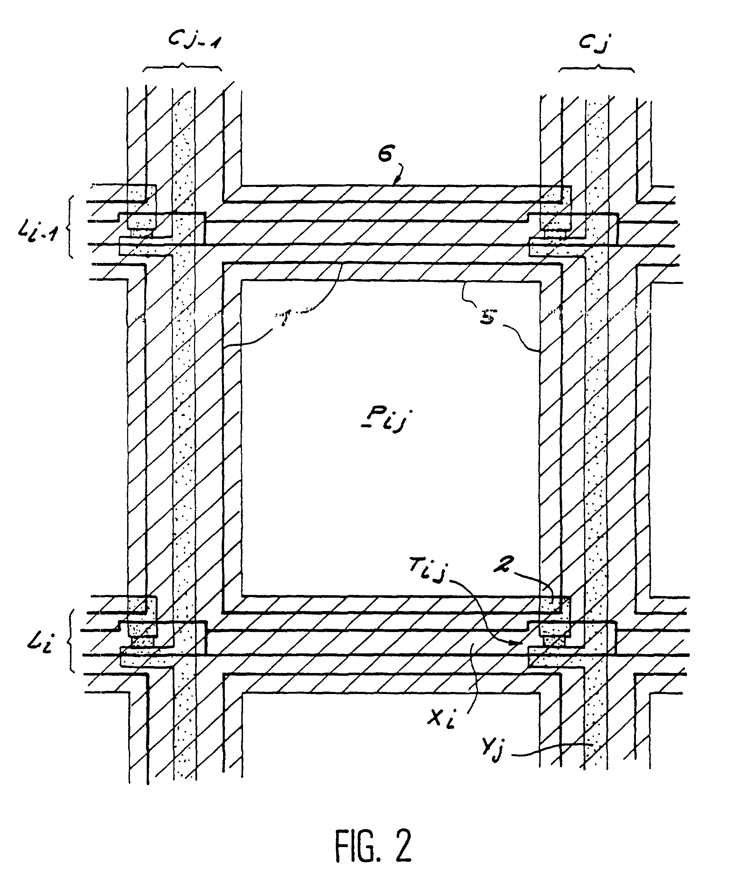

Dans la figure 2 le masque noir 6 a été réalisé entièrement en couches minces sur la plaque où sont déposés les composants de commande au cours d'une seule étape du procédé de fabrication. Il est représenté en zone hachurée sur la figure 2 et recouvre totalement la surface non commandée de l'écran que sont les lignes Lᵢ et les colonnes Cⱼ. Ce masque a donc la forme d'un quadrillage opaque divisant l'écran en autant d'éléments d'affichage qu'il y a d'éléments Pᵢⱼ. Son procédé de fabrication étant du type de ceux utilisés pour le dépôt, la photolithographie et la gravure des couches minces, la précision de l'alignement de ce masque par rapport à la surface non commandée de l'écran qui est, elle aussi, réalisée en couches minces est de l'ordre de 0,5*µ* m (et peut aller jusqu'à 3 *µ*m) et permet une faible perte de surface active de l'élément Pᵢⱼ correspondant à la surface comprise entre les bords 1 des lignes Li et des colonnes Cⱼ et les bords libres 5 du masque opaque 6.

Ce dernier peut être déposé directement sur la plaque-substrat et les composants Tᵢⱼ ainsi que les lignes de contact Xᵢ et Yⱼ par dessus, ou bien il peut être desposé sur les composants Tᵢⱼ et les lignes de contact Xᵢ et Yⱼ, eux-mêmes déposés directement sur la plaque-substrat.

Dans tous les cas, lorsque le masque opaque 6 est constitué d'un matériau conducteur il faut l'isoler de Xi, Yj et Tij par une couche d'isolant.

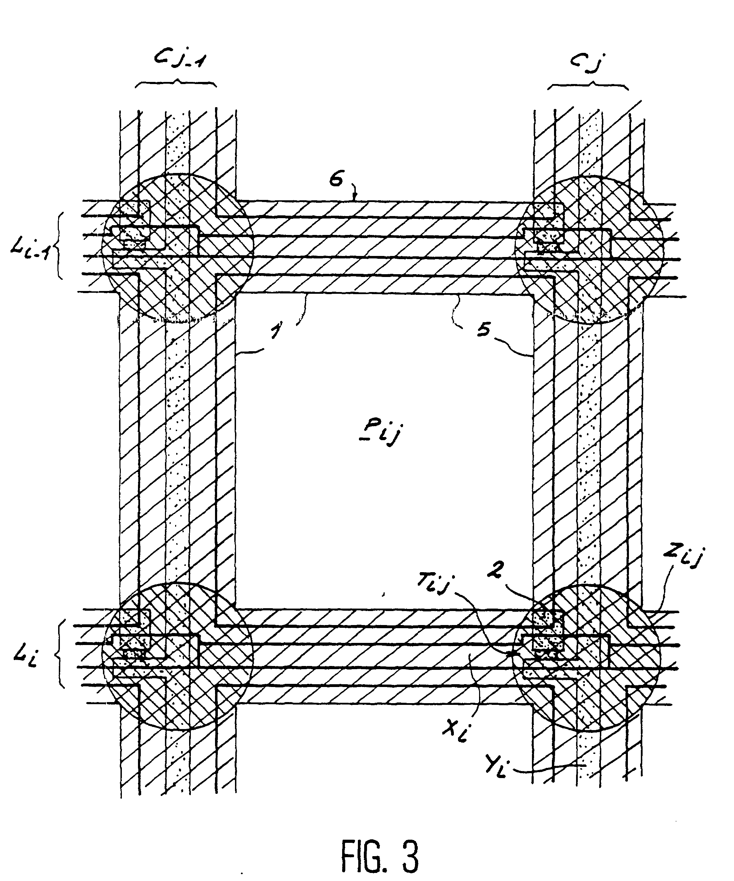

Sur la figure 3 le masque opaque représenté en zone hachurée a été réalisé en deux parties ; l'une, la partie 6, a été déposée en couches minces sur la plaque substrat sur ou sous les composants Tᵢⱼ et les lignes de contact Xi et Yj et correspond exactement au masque noir 6 décrit dans la figure 2, et l'autre partie a été déposée sur la contreplaque. La partie 6 recouvre donc totalement les lignes Lᵢ et les colonnes Cⱼ et les pertes de surfaces actives des éléments Pᵢⱼ correspondent à la surface comprise entre les bords 1 et 5. La seconde partie du masque opaque est constituée de zones Zᵢⱼ recouvrant les composants Tᵢⱼ. Ces zones Zᵢⱼ peuvent être de différentes formes comme ronde, carrée, hexagonale ou toute autre, la seule contrainte étant qu'elles recouvrent les composants Tᵢⱼ.

Ces zones peuvent être gravées directement sur la contre-plaque, la contre-électrode les recouvrant, ou bien elles peuvent être gravées sur la contre-électrode, elle-même déposée directement sur la contre-plaque, et recouvrent la partie de la zone non commandée qui n'est pas recouverte par les segments Sij et S'ij.

Ce mode de réalisation a l'avantage de protéger de la lumière extérieure les composants Tᵢⱼ qui peuvent être photosensibles où dont les matériaux utilisés pour leur fabrication peuvent être endommagés, avec le temps, au contact de la lumière.

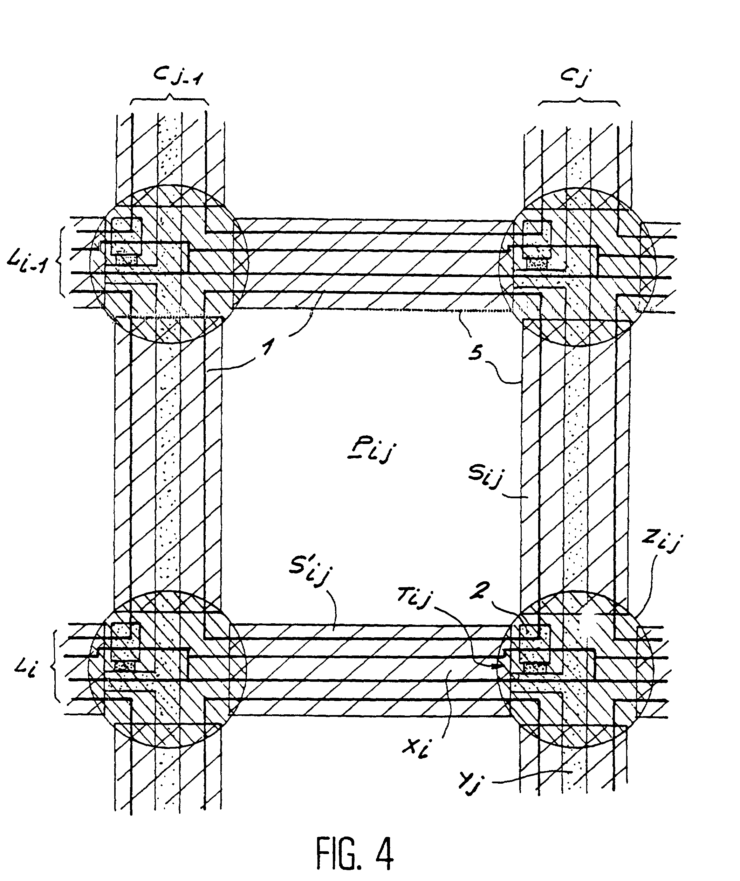

La figure 4 représente un masque opaque selon un mode de réalisation de l'invention. Ce masque opaque a été réalisé en deux parties. Il comporte d'une part des segments Sᵢⱼ verticaux et S'ᵢⱼ horizontaux recouvrant les lignes Lᵢ et les colonnes Cj entre les composants Tᵢⱼ qui se trouvent aux intersections entre ces lignes et colonnes et, d'autre part des zones Zᵢⱼ, et recouvrant les composants Tᵢⱼ joignant les segments consécutifs. Ces zones sont identiques à celles de la figure 3. Les segments Sᵢⱼ et S'ᵢⱼ sont déposés sur la plaque substrat et permettent ainsi une faible perte de surface active des éléments Pᵢⱼ correspondant à la surface entre les bords 1 et 5. La longueur de cette surface de recouvrement est de l'ordre de 0,5 *µ*m et 3 *µ*m. Ils sont de forme rectangulaire mais peuvent avoir n'importe quelle autre forme, tant qu'ils recouvrent la partie de la surface non commandée située entre les bords des éléments Pᵢⱼ voisins et entre les composants Tᵢⱼ. Les zones Zᵢⱼ sont déposées sur la contreplaque, et recouvrent la partie de la zone non commandée qui n'est pas recouverte par les segments Sᵢⱼ et S'ᵢⱼ.

Cette structure a l'avantage de permettre d'éliminer les court-circuits au niveau des lignes de contact par l'utilisation d'un laser.

En effet, avec les cas précédents, la réparation qui consiste à isoler l'élément défectueux du fait d'un court-circuit entre une ligne Xᵢ et une colonne Yⱼ serait impossible car, pour cela, on utilise un laser qui en coupant cette ligne ou cette colonne la mettrait en contact avec le cadre opaque qui peut être conducteur et situé au-dessus ou en-dessous d'elle. La configuration du cadre noir selon la figure 4 ménage des zones où la coupure au laser est possible sans créer de court-circuits fatals.

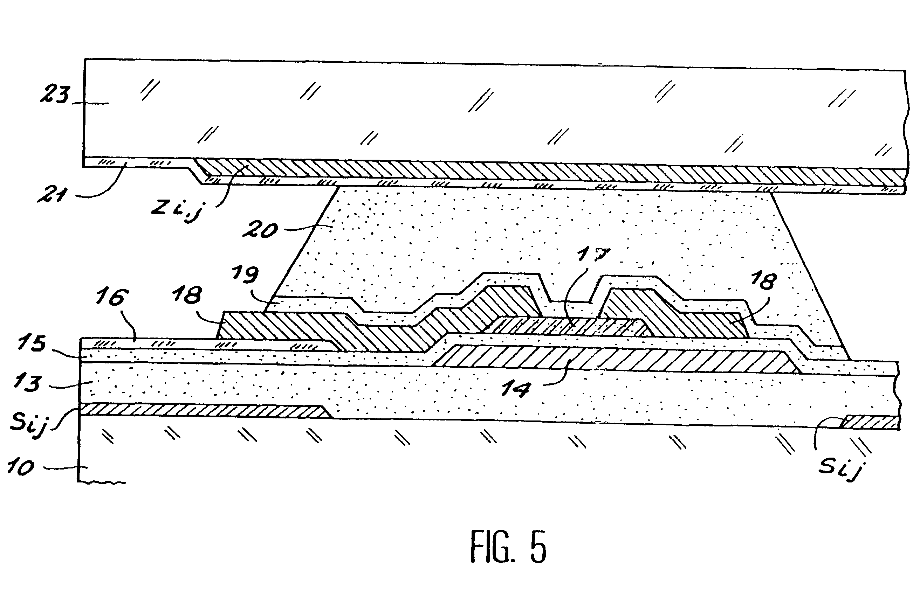

La figure 5 montre un mode de réalisation du masque opaque décrit figure 4 par une vue en coupe d'un composant Tᵢⱼ de type connu de transistor en couches minces, et commandant une cellule à cristal liquide. Sur cette figure 5, l'élément à transparence ou réflectance contrôlée est une cellule à cristal liquide fonctionnant en mode transmissif mais cet élément pourraît être une cellule à cristal liquide fonctionnant en mode réflexif ou transflexif sans sortir du cadre de l'invention. Cet écran correspond à celui décrit en relation avec la figure 4. Un procédé de fabrication d'un pixel décrit das le paragraphe précédent comporte les étapes suivantes :
1°/ - préparation de la plaque-substrat 10 et de la contreplaque 23 ;
2°/ - dépôt, photolithographie, et gravure d'un matériau opaque (titane, chrome, molybdène, aluminium tungstène par exemple), sur une épaisseur de l'ordre de 500 à 3.000Å sur la plaque 10 pour former les segments Sᵢⱼ et S'ᵢⱼ et sur la contreplaque 23 pour former les zones Zᵢⱼ.
3°/ - dépôt, photolithographie et gravure d'un matériau isolant 13 (dioxyde de silicium ou nitrure de silicium par exemple), sur une épaisseur de l'ordre de 0,5 à 2*µ*m sur les segments Sᵢⱼ et S'ᵢⱼ du masque, réalisant leur isolation.
4°/ - dépôt, photolithographie et gravure d'un ou de plusieurs matériaux conducteurs sur une épaisseur de l'ordre de 200 à 3000 Å réalisant la grille 14 du transistor.
5°/ - dépôt d'un sandwich d'épaisseur de l'ordre de 1000 à 5000 Å d'un matériau isolant réalisant l'isolant 15 (oxyde de silicium ou nitrure de silicium par exemple), de silicium amorphe (a-Si) et de silicum dopé n+ (n+Si) réalisant la couche semiconductrice 17.
6°/ - photolitrographie et gravure sèche du a Si et a Si
7°/ - photolithographie et gravure sèche de l'isolant 15;
8°/- dépôt, photolithographie et gravure humide de l'oxyde d'Indium et d'Etain (TTO) sur une épaisseur de l'ordre de 300 à 3000 Å réalisant l'électrode 16 sur la plaque 10 et la contre-électrode 21 sur la contre-plaque 23.
9°/ - dépôt, photolithographie et gravure humide d'un matériau conducteur sur une épaisseur de l'ordre de 500 à 5000 Å réalisant les sources et drains 18 ;
10°/ - gravure sèche du n+.
11°/ - test et réparation ;
12°/ - dépôt d'un matériau isolant sur une épaisseur de l'ordre de 300 à 5000 Å réalisant la couche de passivation 19.
13°/ - dépôt, photolithographie et gravure humide d'un matériau type polyimide souvent appelé LBL (pour Light Blocking Layer) sur une épaisseur de l'ordre de 3 à 6*µ*m réalisant la couche 20 qui a pour fonction de créer un espace entre l'électrode 16 et l'électrode 21 pour le cristal liquide et par ailleurs bloque la photosensibilité du composant.
14°/ - gravure du matériau isolant de la couche 19.
15°/ - dépôt et frottement du polyimide d'alignement sur la plaque 10 ainsi que sur la contreplaque 23.
16°/ - première découpe de la plaque 10 et découpe définitive de la contre plaque 23.
17°/ - assemblage de la plaque 10 et de la contreplaque 23.
18°/ - remplissage en cristal liquide de l'espace entre les électrodes 16 et 21.
19°/ - pressage des deux plaques l'une contre l'autre.
20°/ - scellement par un joint de colle périphérique.
21°/ - découpe définitive de la plaque 10.

Dans le cas où les segments Sᵢⱼ et S'ᵢⱼ sont déposés sur les composants Tᵢⱼ et les lignes de contact Xᵢ et Yⱼ, la troisième étape et le dépôt, la photolithographie et la gravure d'un matériau conducteur réalisant le masque opaque décrits dans la seconde étape seront réalisés après la douzième étape.

Dans le cas où les zones Zᵢⱼ sont déposées par dessus la contre-électrode 21, elle même directement déposée sur la contre-plaque 23, le dépôt, la photolithographie et la gravure humide décrits dans la seconde étape du matériau opaque utilisé pour constituer ces zones Zᵢⱼ seront réalisés après la huitième étape.

La présente invention s'applique à tous types d'écrans de visualisation à adressage matriciel modulant la lumière.

## Revendications

1. Ecran plat à cristaux liquides à matrice active comportant :
une plaque (10) portant sur une face un réseau de conducteurs de lignes (xᵢ) et une mosaïque d'électrodes de commande (Pᵢⱼ) et des composants en couches minces (Tᵢⱼ);
une contre-plaque (23) portant une contre-électrode (21) ;
une couche mince (10) de cristaux liquides insérée entre ladite plaque (10) et ladite contre-plaque (23) ;
un masque opaque en deux parties séparées l'une de l'autre, une première partie déposée sur ladite plaque (10) et une deuxième partie déposée de manière à protéger au moins lesdits composants en couches minces (Tᵢⱼ) de la lumière extérieure,
caractérisé en ce que
ladite première partie du masque opaque comprend des segments séparés les uns des autres recouvrant au moins en partie la surface entre les électrodes de commande (Pᵢⱼ) et en ce que
ladite deuxième partie comporte des zones opaques (Zᵢⱼ) situées en face desdits composants en couches minces (Tᵢⱼ).

2. Ecran plat selon la revendication 1, caractérisé en ce que les segments séparés les uns des autres sont constitués de segments respectivement verticaux (Sᵢⱼ) et horizontaux (S'ᵢⱼ) séparés par les composants en couches minces (Tᵢⱼ).

3. Ecran plat selon les revendications 1 ou 2, caractérisé en ce que les segments (Sᵢⱼ, S'ᵢⱼ) sont déposés sur ou sous les lignes de contact (Xᵢ, Yⱼ).

4. Ecran plat selon l'une des revendications 1 à 3, caractérisé en ce que les zones opaques (Zᵢⱼ) déposées sur la contre-plaque (23) sont déposées sous la contre-électrode (21).

5. Ecran plat selon l'une quelconque des revendications 1 à 3, caractérisé en ce que les zones opaques (Zᵢⱼ) déposées sur la contre-plaque (23) sont déposées sur la contre-électrode (21), elle-même déposée directement sur la contre-plaque (23).

6. Ecran plat selon l'une quelconque des revendications 1 à 3, caractérisé en ce que les zones opaques (Zᵢⱼ) sont déposées sur la première plaque (10).

7. Ecran plat selon la revendication 6, caractérisé en ce que les zones opaques (Zᵢⱼ) sont déposées sur les composants (Tᵢⱼ).

8. Ecran plat selon l'une quelconque des revendications précédentes, caractérisé en ce que les segments opaques (Sᵢⱼ, S'ᵢⱼ) recouvrent les électrodes (Pᵢⱼ) sur une largeur de l'ordre de 0,5 à 3 microns.

9. Ecran plat selon l'une quelconque des revendications 1 à 8, caractérisé en ce que les zones opaques (Zᵢⱼ) ont une forme circulaire, carrée, hexagonale ou octogonale.

10. Ecran plat selon l'une quelconque des revendications précédentes, caractérisé en ce que les segments (Sᵢⱼ, S'ᵢⱼ) et les zones opaques (Zᵢⱼ) sont au moins en partie réalisées en métal, comme le titane, le chrome, le molybdène, l'aluminium ou le tungstène.

11. Ecran plat selon l'une quelconque des revendications précédentes, caractérisé en ce que les composants de commande (Tᵢⱼ) sont du type à deux terminaisons comme des diodes ou des éléments métal-isolant-métal.

12. Ecran plat selon l'une quelconque des revendications 1 à 10, caractérisé en ce que les composants de commande (Tᵢⱼ) sont de type à trois terminaisons comme des transistors en silicium amorphe, monocristallin ou polycristallin.

13. Ecran plat selon l'une quelconque des revendications précédentes, caractérisé en ce que l'écran est à projection ou à vision directe.

14. Ecran plat selon l'une quelconque des revendications précédentes, caractérisé en ce que le pas du réseau matriciel de cellules à cristal liquide est de l'ordre de 40 à 100*µ*m et la largeur des intervalles entre les cellules de l'ordre de 8 à 20*µ*m.

15. Ecran plat selon l'une quelconque des revendications précédentes, caractérisé en ce que les matériaux isolants utilisés dans sa fabrication sont du nitrure de silicium et de l'oxyde de silicium.

## Claims

1. Active-matrix liquid-crystal flat screen comprising:
a plate (10) carrying on one face an array of line conductors (Xᵢ) and a mosaic of drive electrodes (Pᵢⱼ) and of thin film components (Tᵢⱼ);
a backplate (23) carrying a counterelectrode (21);
a thin liquid-crystal film (10) inserted between the said plate (10) and the said backplate (23);
an opaque mask in two parts separated one from the other, a first part deposited on the said plate (10) and the second part deposited so as to protect at least the said thin-film components (Tᵢⱼ) from the external light,
characterized in that
the said first part of the opaque mask comprises segments separated one from the other covering at least in part the area between the drive electrodes (Pᵢⱼ) and in that
the said second part comprises opaque regions (Zᵢⱼ) located facing the said thin-film components (Tᵢⱼ).

2. Flat screen according to Claim 1, characterized in that the segments separated one from the other are made up of vertical (Sᵢⱼ) and horizontal (S'ᵢⱼ) segments respectively, separated by the thin-film components (Tᵢⱼ).

3. Flat screen according to Claims 1 or 2,
characterized in that the segments (Sᵢⱼ, S'ᵢⱼ) are deposited over or under the contact rows (Xᵢ, Yⱼ).

4. Flat screen according to one of Claims 1 to 3,
characterized in that the opaque regions (Zᵢⱼ) deposited on the backplate (23) are deposited under the counterelectrode (21).

5. Flat screen according to any one of Claims 1 to 3, characterized in that the opaque regions (Zᵢⱼ) deposited on the backplate (23) are deposited on the counterelectrode (21), itself deposited directly on the backplate (23).

6. Flat screen according to any one of Claims 1 to 3, characterized in that the opaque regions (Zᵢⱼ) are deposited on the first plate (10).

7. Flat screen according to Claim 6, characterized in that the opaque regions (Zᵢⱼ) are deposited over the components (Tᵢⱼ).

8. Flat screen according to any one of the preceding claims, characterized in that the opaque segments (Sᵢⱼ, S'ᵢⱼ) cover the electrodes (Pᵢⱼ) over a width of about 0.5 to 3 microns.

9. Flat screen according to any one of Claims 1 to 8, characterized in that the opaque regions (Zᵢⱼ) have a circular, square, hexagonal or octagonal shape.

10. Flat screen according to any one of the preceding claims, characterized in that the segments (Sᵢⱼ, S'ᵢⱼ) and the opaque regions (Zᵢⱼ) are at least in part made of metal, such as titanium, chromium, molybdenum, aluminium or tungsten.

11. Flat screen according to any one of the preceding claims, characterized in that the drive components (Tᵢⱼ) are of the two-terminal type such as diodes or metal-insulator-metal elements.

12. Flat screen according to any one of Claims 1 to 10, characterized in that the drive components (Tᵢⱼ) are of the three-terminal type such as transistors made of amorphous, single-crystal or polycrystalline silicon.

13. Flat screen according to any one of the preceding claims, characterized in that the screen is a projection or a direct vision screen.

14. Flat screen according to any one of the preceding claims, characterized in that the pitch of the liquid-crystal cell matrix array is about 40 to 100 µm and the width of the gaps between the cells is about 8 to 20 µm.

15. Flat screen according to any one of the preceding claims, characterized in that the insulating materials used in its fabrication are silicon nitride and silicon oxide.

## Patentansprüche

1. Bildschirm mit einer aktiven Flüssigkristallmatrix, enthaltend:
eine Platte (10), die auf einer Fläche ein Raster von Zeilenleitern (Xᵢ) und ein Mosaik von Steuerelektroden (Pᵢⱼ) und Dünnschichtkomponenten (Tᵢⱼ) trägt,
eine eine Gegenelektrode (21) tragende Gegenplatte (23),
eine dünne Flüssigkristallschicht (10), die zwischen der Platte (10) und der Gegenplatte (23) eingefügt ist,
eine opake Maske aus zwei voneinander getrennten Teilen, wobei auf die Platte (10) ein erster Teil aufgebracht und ein zweiter Teil derart aufgebracht ist, daß wenigstens die Dünnschichtkomponenten (Tᵢⱼ) gegenüber Außenlicht geschützt sind,
dadurch gekennzeichnet, daß
der erste Teil der opaken Maske voneinander getrennte Segmente enthält, die wenigstens teilweise die Oberfläche zwischen den Steuerelektroden (Pᵢⱼ) bedecken, und daß
der zweite Teil opake Bereiche (Zᵢⱼ) enthält, die gegenüber den Dünnschichtkomponeten (Tᵢⱼ) liegen.

2. Bildschirm nach Anspruch 1, dadurch gekennzeichnet, daß die voneinander getrennten Segmente durch vertikale (Sᵢⱼ) bzw. horizontale (S'ᵢⱼ) Segmente gebildet sind, die durch die Dünnschichtkomponenten (Tᵢⱼ) getrennt sind.

3. Bildschirm nach Anspruch 1 oder 2, dadurch gekennzeichnet, daß die Segmente (Sᵢⱼ, S'ᵢⱼ) auf oder unter den Kontaktzeilen (Xᵢ, Yⱼ) aufgebracht sind.

4. Bildschirm nach einem der Ansprüche 1 bis 3, dadurch gekennzeichnet, daß die auf die Gegenplatte (23) aufgebrachten opaken Bereiche (Zᵢⱼ) auf die Gegenelektrode (21) aufgebracht sind.

5. Bildschirm nach einem der Ansprüche 1 bis 3, dadurch gekennzeichnet, daß die auf die Gegenplatte (23) aufgebrachten opaken Bereiche (Zᵢⱼ) auf die Gegenelektrode (21) aufgebracht sind, die selbst direkt auf die Gegenplatte (23) aufgebracht ist.

6. Bildschirm nach einem der Ansprüche 1 bis 3, dadurch gekennzeichnet, daß die opaken Bereiche (Zᵢⱼ) auf die erste Platte (10) aufgebracht sind.

7. Bildschirm nach Anspruch 6, dadurch gekennzeichnet, daß die opaken Bereiche (Zᵢⱼ) auf die Komponenten (Tᵢⱼ) aufgebracht sind.

8. Bildschirm nach einem der vorangehenden Ansprüche, dadurch gekennzeichnet, daß die opaken Segmente (Sᵢⱼ, S'ᵢⱼ) die Elektroden (Pᵢⱼ) über eine Breite in der Größenordnung von 0,5 bis 3 um bedecken.

9. Bildschirm nach einem der Ansprüche 1 bis 8, dadurch gekennzeichnet, daß die opaken Bereiche (Zᵢⱼ) eine runde, quadratische, hexagonale oder achteckige Form aufweisen.

10. Bildschirm nach einem der vorangehenden Ansprüche, dadurch gekennzeichnet, daß die Segmente (Sᵢⱼ, S'ᵢⱼ) und die opaken Bereiche (Zᵢⱼ) wenigstens teilweise aus Metall bestehen, wie Titan, Chrom, Molybdän, Aluminium oder Wolfram.

11. Bildschirm nach einem der vorangehenden Ansprüche, dadurch gekennzeichnet, daß die Steuerkomponenten (Tᵢⱼ) vom Typ mit zwei Anschlüssen sind, wie Dioden oder Elementen mit Metall-lsolator-Metall.

12. Bildschirm nach einem der Ansprüche 1 bis 10, dadurch gekennzeichnet, daß die Steuerkomponenten (Tᵢⱼ) vom Typ mit drei Anschlüssen sind, wie Transistoren aus amorphem Silizium, Mono- oder Polykristall.

13. Bildschirm nach einem der vorangehenden Ansprüche, dadurch gekennzeichnet, daß der Schirm ein Projektionsschirm oder ein Schirm mit direkter Betrachtung ist.

14. Bildschirm nach einem der vorangehenden Ansprüche, dadurch gekennzeichnet, daß der Rasterschritt des Matrixrasters der Flüssigkristallzellen in der Größenordnung von 40 bis 100 um und die Breite der Zwischenräume zwischen den Zellen in der Größenordnung von 8 bis 20 µm liegt.

15. Bildschirm nach einem der vorangehenden Ansprüche, dadurch gekennzeichnet, daß die bei der Herstellung angewendeten Isoliermaterialien aus Siliziumnitrid und aus Siliziumoxyd bestehen.
